Europäisches Patentamt

European Patent Office

Office européen des brevets

(11) Veröffentlichungsnummer: **0 561 785 B1**

## (12) EUROPÄISCHE PATENTSCHRIFT

(45) Veröffentlichungstag der Patentschrift: **28.12.94**

(51) Int. Cl.$^5$: **B60R 1/08**

(21) Anmeldenummer: **91916572.0**

(22) Anmeldetag: **17.09.91**

(86) Internationale Anmeldenummer:
**PCT/EP91/01764**

(87) Internationale Veröffentlichungsnummer:
**WO 92/11147 (09.07.92 92/17)**

(54) **RÜCKBLICKSPIEGEL FÜR KRAFTFAHRZEUGE.**

(30) Priorität: **20.12.90 DE 4040839**

(43) Veröffentlichungstag der Anmeldung:
**29.09.93 Patentblatt 93/39**

(45) Bekanntmachung des Hinweises auf die
Patenterteilung:
**28.12.94 Patentblatt 94/52**

(84) Benannte Vertragsstaaten:
**AT BE CH DE DK ES FR GB GR IT LI NL SE**

(56) Entgegenhaltungen:
EP-A- 0 210 757      DE-A- 1 755 828
DE-A- 1 921 076      DE-A- 2 926 767
DE-B- 1 280 074      FR-A- 2 014 331
NL-A- 6 400 067      NL-A- 8 001 726
US-A- 2 857 810

(73) Patentinhaber: **Schlenke, Hubert
Hasenwinkel 13
D-59872 Meschede (DE)**

(72) Erfinder: **Schlenke, Hubert
Hasenwinkel 13
D-59872 Meschede (DE)**

(74) Vertreter: **Hanewinkel, Lorenz, Dipl.-Phys.
Patentanwalt
Ferrariweg 17a
D-33102 Paderborn (DE)**

**Beschreibung**

Die Erfindung betrifft einen Rückspiegel für Kraftfahrzeuge, bestehend aus einem Planspiegelabschnitt und mindestens einem seitlich daran mit stetiger Steigung anschließendem konvex gekrümmten Seitenspiegelabschnitt, der an der Übergangslinie zum Planspiegelabschnitt die Krümmung 0 hat und der mit zunehmenden Abstand von dem Planspiegelabschnitt eine fortlaufend stärkere Krümmung aufweist, die mit zunehmenden Abstand von der Übergangslinie stetig progressiv zunimmt.

Ein derartiger Rückblickspiegel ist aus der NL-A-6 400 067 als ein Fahrzeugaußenspiegel bekannt. Hierbei geht der flache Spiegel kontinuierlich mit abnehmendem Krümmungsradius in einen Kugelspiegel über. Da der Außenspiegel unterhalb der Augenhöhe eines Fahrers angeordnet ist und nur der Seitenraum vom Fahrzeug erfaßt wird, sind die optischen Verzerrungen der Horizontlinie, die sich im Übergangsbereich zur Kugelform ergeben, tolerabel. Für eine Innenspiegel der über der Augenhöhe eines Fahrers und zur Fahrzeugmitte gegen ihn versetzt angeordnet ist und der auch mindestens den hinter dem Fahrzeug liegenden Sichtbereich erfaßt, entstehen bei einer derartigen Dimensionierung Doppelbilder und eine starke Verzerrung der Horizontlinie, was zu Beobachtungsstörungen führt.

Weiterhin ist aus der EP 0 210 757 A1 ein Rückblickspiegel vorbekannt. Bei diesem ist es vorgesehen, daß der plane Spiegelabschnitt tangential in den gekrümmten übergeht, dessen Krümmung in der Übergangslinie sprunghaft zunimmt und nach Art einer Spirale weiter gesteigert wird. Die sprunghafte Krümmungsänderung hat sowohl für die Erkennbarkeit eines Spiegelbildes wegen der Doppelbildentstehung als auch für die Fertigung Nachteile.

Weiterhin sind gemäß DE 17 55 828 A1 Innenrückblicksspiegel bekannt, bei denen sich an einen Planspiegelabschnitt ein horizontal und vertikal gekrümmter Seitenspiegelabschnitt anschließt. Die Krümmungsradien des Seitenspiegelabschnitts sollen mit zunehmendem Abstand von der Spiegelmitte kleiner werden. Die Krümmung dieses Seitenspiegelsabschnitts nimm zwar nach außen zu, diese Krümmungszunahme ist jedoch nicht stetig, sonder stufig. Durch diese stufige Krümmungssteigung wird nicht nur an der Übergangslinie vom Plan- in den Seitenspiegelabschnitt, sondern bei jedem Krümmungsradiuswechsel ein als Knick wahrnehmbarer Übergang im Seitenspiegelabschnitt verursacht, wodurch ein den Sicherheitsanforderungen genügender Seitenblick nicht ermöglicht wird, weil mit zunehmender Anzahl der Radienwechsel ebenso viele Knicke, welche das Spiegelbild verzerren und Doppelbilder verursachen, auf dem Seitenspiegelabschnitt sind. Zwar vermag eine Ausführung der Seitenspiegelkrümmung, wenn die jeweilige Differenz der Krümmungsradien entsprechend gering festgelegt wird, eine annähernd verzerrungsfreie Seitensicht des Fahrers zu ermöglichen, jedoch ist auch bei dieser Krümmungsfestlegung kein nahtloser Übergang der Krümmung von dem Planspiegelabschnitt in den gekrümmten Seitenspiegelabschnitt vorgesehen, so daß zumindest an der Übergangslinie eine optische Beeinträchtigung der Rücksicht besteht, welche die Gebrauchstauglichkeit dieses Rückblicksspiegels insgesamt beeinträchtigt.

Weiterhin sind gem. DE 28 49 468 A 1 Innenrückblicksspiegel bekannt, bei denen der Planspiegelabschnitt im Bezug auf seine Horizontalachse in einen konvex gekrümmten, gleichmäßig zylindermantelförmigen Seitenspiegelabschnitt übergeht, wodurch sich der Sichtwinkel durch die konvexe Krümmung des Seitenspiegelabschnitts im Vergleich zum Planspiegelabschnitt vergrößert. Dieser Spiegel ermöglicht zwar den Blick seitlich aus dem Fahrzeug, hat aber den Nachteil einer durch die zylindermantelförmige Krümmung bedingten verzerrten Wiedergabe des seitlichen Blickfeldes. Eine Einschätzung der Position überholender Fahrzeuge ist außerordentlich schwierig. Zudem besteht kein nahtloser Übergang von dem Planspiegelabschnitt in den gekrümmten Seitenspiegelabschnitt, da die Krümmung des Seitenspiegelabschnittes an der Übergangslinie sich sprunghaft ändert. Deshalb wird die Übergangslinie vom Fahrer immer als Knick welcher ein unregelmäßiges Spiegelbild, insbesondere Doppelbilder, verursacht, wahrgenommen. Durch die Verzerrung des Spiegelbildes und dem Knick an der Übergangslinie kann der Fahrer insbesondere die Position überholender Fahrzeuge nicht oder nicht genügend eingeschätzten, was eine nicht unerhebliche Einschränkung der Sicherheit zur Folge hat.

Weiterhin sind gem. DE 34 01 033 A 1 Innenrückblicksspiegel bekannt, die durch eine Kombination von einem Haupt- und zwei Seitenspiegeln. welche unabhängig voneinander in verschiedene Blickwinkel eingestellt werden können, den Blick durch das seitliche Fenster unverzerrt ermöglichen.

Der konstruktionsbedingte Abstand zwischen den jeweiligen Einzelspiegeln läßt jedoch einen fehlerfreien Seltenblick nicht zu, da der Fahrer nur Doppelbilder wahrnimmt, wenn ein Auge in den Hauptspiegel und das andere Auge in den abgewinkelten Seitenspiegel schaut. Die beiden Augen empfangen von den abgewinkelten Spiegelteilen zwei unterschiedliche Bildsignale, welche vom menschlichen Gehirn nur ungenau zu einem Gesamtbild zusammengefügt werden können. Hierdurch ergeben sich nicht unerhebliche, die Verkehrssicherheit beeinträchtigende optische Wahrnehmungsfehler. Dieser Rückblicksspiegel bedingt zudem eine durch Ermüdung frühzeitige Einschränkung der Sehfähigkeit des Fahrers, da er bei Benutzung des dreigeteilten Rückspiegels nicht nur einen, sondern gleich drei Innenspiegel zu beachten hat.

Zusammenfassend schließen die bisher bekannten Variationen eines Rückblicksspiegels nicht ausreichend den "toten Winkel", der zwischen dem direkten Sichtbereich und dem Seitenausblick aus dem gekrümmten Spiegelbereich liegt, mit ein oder gewähren nur einen, durch Verzerrung oder Doppelbilder verursachten, den Sicherheitsanforderungen nicht genügenden Seitenblick.

Die Erfindung liegt die Aufgabe zugrunde, einen Spiegel der bezeichneten Art für eine Verwendung als Innenrückspiegel umzugestalten, wobei sichergestellt sein soll, daß ohne Belassung eines "toten Winkels" auch der Bereich des vorderen, auf der fahrerseite gelegenen Seitenfensters optisch erfaßt wird und der räumlich gekrümmte Bereich des Rückblicksspiegels eine mit Bezug auf die Position des eigenen Fahrzeugs gut einschätzbare, doppelbildfreie und verzerrungsarme Darstellung von seitlichen Fahrzeugen gewährleistet.

Die Lösung der Aufgabe besteht darin, daß der Rückblickspiegel ein Innenrückblickspiegel ist, daß die Schnittlinien othogonaler Ebenen des Seitenspiegelabschnittes Kreise sind, deren Krümmung jeweils der Krümmung einer horizontalen Bezugslinie auf dem Seitenspiegelabschnitt in deren Schnittpunkt mit den jeweiligen Kreisen entspricht, daß die Krümmung des Seitenspiegelabschnitts nach Art einer Klotoide linear mit der Bogenlänge auf der horizontalen Bezugslinie auf dem Seitenspiegelabschnitt zunimmt, daß die Krümmung des auf der fahrerseite befindlichen Seitenspiegelabschnitts festlegende Klotoide einen Klotoidenparameter A zwischen 100 mm und 200 mm hat und daß die horizontale Bezugslinie mittig oder oberhalb der Spiegelmitte, etwa in Höhe einer scheinbaren Horizontlinie für den Normalbeobachter, verläuft.

Der erfindungsgemäße Krümmungsverlauf zeichnet sich dadurch aus, daß die konvexe Krümmung othogonaler Schnittlinien der Seitenspiegelabschnittoberfläche der Krümmung einer horizontalen Bezugslinie auf dem Seitenspiegelabschnitt in den jeweiligen Schnittstellen entspricht.

Durch den erfindungsgemäßen vom Planspiegelabschnitt progressiv steigenden Krümmungsverlauf des Seitenspiegelabschnitts wird eine weitesgehend verzerrungsfreie, den bisherigen "toten Winkel" überwindende Darstellung der seitlich am eigenen Fahrzeug befindlichen Gegenstände, insbesonders überholender Fahrzeuge, erreicht. Aufgrund des Verkleinerungseffektes, welcher sich aus den zum Spiegelende hin stetig progressiv abnehmenden Krümmungsradien ergibt, wird die durch das Annähern bedingte Vergrößerung eines überholenden Fahrzeuges nahezu kompensiert. Durch diese Kompensierung wird ein seitlich vorbeifahrendes Fahrzeug optisch im Vergleich zu den herkömmlichen Planspiegeln bestens erfasst, da sich die scheinbare Geschwindigkeit, in der das Fahrzeug im Spiegelbild vorbeifährt, auf ein besser erfassbares Maß reduziert. Die kontinuierliche Änderung der Krümmung vom Planspiegelabschnitt zum Seitenspiegelabschnitt ermöglicht eine räumliche Erfassung der beobachteten Objekte mit beiden Augen.

Es hat sich als besonders vorteilhaft erwiesen, die horizontale Bezugslinie etwa auf Höhe einer scheinbaren Horizontlinie für den Normalbeobachter, also oberhalb der horizontalen Spiegelmitte, festzulegen, da der Normalbeobachter die Grundeinstellung des Rückblickspiegels immer so wählt, daß vom größten Teil der Spiegelfläche die Fahrbahn reflektiert wird.

Der Kurvenverlauf der horizontalen Krümmung der Spiegelfläche als Klotoide ausgebildet. Aus der Forderung, daß die Krümmung der Spiegelfläche linear mit der Bogenlänge wachsen soll, ergibt sich das Krümmungsgesetz $1/R = C \times L$, wobei $C = A^2$ ist. A ist dabei der sogenannte Klotoidenparameter.

Der Übergang von dem Planspiegelabschnitt in den gekrümmten Seitenspiegelabschnitt erfolgt hierbei ebenso nach der Gesetzmäßigkeit der Klotoide. Hieraus resultiert ein kontinuierlicher Übergang von $R = \infty$ nach $R = x$, dem laufenden Radius über die Bogenlänge. Es hat sich zur Überbrückung des bisherigen "toten Winkels" auf der Fahrerseite als ausreichend erwiesen, wenn der Klotoidenverlauf einen Parameter von A gleich 100 mm bis 200 mm aufweist und bis zu einem Endradius von $R = 100$ mm bis $R = 300$ mm verlaufend ausgebildet wird.

Besondere Merkmale des Rückblickspiegels sind in den Unteransprüchen gekennzeichnet.

Die Länge des Planspiegelabschnitts verhält sich zur Länge des Seitenspiegelabschnitts etwa wie 2 : 1, wobei der Seitenspiegelabschnitt etwa eine Länge von 8 - 15 cm, vorzugsweise 12 cm, aufweist.

Als besonders vorteilhaft hat sich erwiesen, daß der Klotoidenverlauf einen Klotoidenparameter A von 130 mm aufweist. Die hieraus sich in der Praxis ergebende gekrümmte Fläche verläßt die Ebene des planen Spiegelabschnitts nur geringfügig nach hinten. Diese geringfügige Abweichung ist nicht nur optisch vorteilhaft, sondern wirkt sich insbesonders auf den Herstellungsprozess des Rückblickspiegels vereinfachend aus. Wegen des stufenlosen Krümmungsüberganges läßt sich der gekrümmte Bereich besonders einfach und ohne optische Fehler durch ein Warmbiegen eines Planglases erzeugen. Die Biegeform läßt sich wegen der mathematischen Definition der gekrümmten Fläche sehr einfach mittels eines programmgesteuerten Automaten erstellen.

Der Innenrück-Spiegel mit der erfindungsgemäßen Krümmung des Seitenspiegelabschnitts ist auch geeignet, den bisherigen "toten Winkel" auf der Beifahrerseite zu überwinden, wenn auch auf dieser Seite ein entsprechend dimensionierter, gekrümmter Seitenspiegelabschnitt an den Planspiegelabschnitt anschließt.

Bei richtiger Dimensionierung kann der Planspiegelabschnitt auf der Beifahrerseite entsprechend verkürzt werden, so daß auch auf dieser Seite des Planspiegelabschnitts ein gekrümmter Seitenspiegelabschnitt Aufnahme finden kann. Hieraus resultiert eine Vergrößerung des Rücksichtwinkels auch zur Beifahrerseite hin ohne eine Vergrößerung des Rückblickspiegels insgesamt zu erfordern.

Bei einer vorteilhaften Ausgestaltung ist der an den Planspiegelabschnitt anschließende Bereich so tordiert, daß die obere Spiegelkante weiter im Fahrzeuginnenraum vorgezogen ist als die untere Spiegelkante. Die Torsion beginnt an der Übergangslinie des Planspiegelabschnitts zum Seitenspiegelabschnitt und erstreckt sich über etwa 1/4 des Seitenspiegelabschnitts. Vom Ende der Torsion bis zum Spiegelaußenrand wird der so entstandene Kippwinkel von 3°-9° beibehalten.

Der um die horizontale Bezugslinie nach unten gedrehte Seitenspiegelabschnitt gibt eine Abbildung der linken Straßenseite etwa in Höhe der Bezugslinie wieder. Die Grundeinstellung des Rückblickspiegels im Fahrzeuginnenraum kann hierdurch für eine optimale Sicht zur Seite und nach hinten ausgerichtet werden. Infolge der Torsion kann bei einstückiger Verbindung des Planspiegelabschnitts mit dem jeweiligen Seitenspiegelabschnitt die für den Planspiegel vorgesehene Kipphebel - Ablendeinrichtung betätigt werden, ohne daß die Funktion des jeweiligen Seitenspiegelabschnitts beeinträchtigt wird.

Als besondere Ausgestaltung der Erfindung wird vorgeschlagen, daß zwischen dem Planspiegelabschnitt und dem Seitenspiegelabschnitt ein Gelenk vorgesehen wird, wodurch die Abblendung des Planspiegelabschnitts durch die bekannte Kipphebeleinrichtung und die Abblendung des Seitenspiegelabschnitts mittels einer Abblendvergütung erfolgt. Auch der abgeblendet eingestellte Planspiegel schließt unmittelbar und ohne Krümmungs- und Steigungsänderung an den gekrümmten Seitenspiegelabschnitt an.

Die Erfindung wird nachfolgend anhand eines Ausführungsbeispieles näher erläutert.

Es zeigen:

Fig. 1 den Rückblickspiegel in Frontansicht schematisch;

Fig. 2 die Rückblickspiegelfläche in einer Sicht von oben;

Fig. 3 einen von der Torsionsbeendungslinie zum linken Spiegelende gesehenen Querschnitt des Seitenspiegelabschnitts (III - III);

Fig. 4 schematisch die von einem Normalfahrer durch den Rück blickspiegel optisch erfassten Sichtwinkel;

Fig. 5 schematisch die Sicht des Fahrers durch den Rückblickspiegel auf ein Fahrzeug hinter und ein Fahrzeug im bisherigen "toten Winkel" links neben dem Fahrer;

Fig. 6 schematisch die vom diesem Rückblickspiegel erfassten Sichtwinkel im Vergleich zu handelsüblichen Rückblickspiegeln.

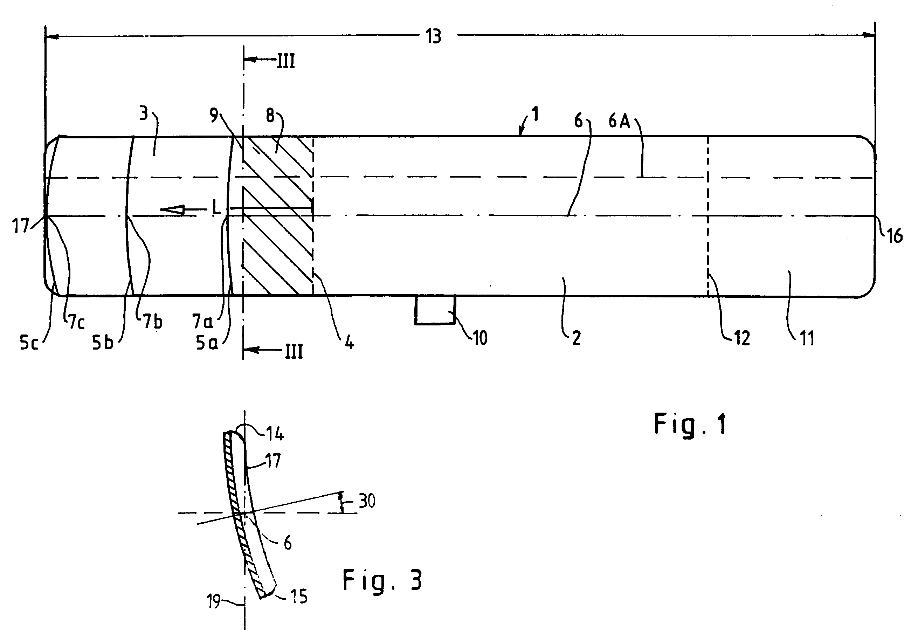

In der Fig. 1 ist der Rückblickspiegel (1) in Frontansicht schematisch dargestellt. Er besteht aus einem von dem rechten Rückblickspiegelende (16) bis zur Übergangslinie (4) verlaufenden Planspiegelabschnitt (2) und einem daran anschließenden von der Übergangslinie (4) bis zum linken Spiegelende (17) verlaufenden konvex gekrümmten Seitenspiegelabschnitt (3). Der Planspiegelabschnitt (2) umfaßt etwa 2/3 und der Seitenspiegelabschnitt (3) etwa 1/3 der gesamten Spiegellänge (13).

Die horizontale Bezugslinie (6) verläuft in dem Ausführungsbeispiel durch die Mitte des Rückblickspiegels (1) in Form einer Klotoide mit dem Parameter A = 130 mm. Die konvexe Krümmung der horizontalen Bezugslinie (6) nimmt mit zunehmender Bogenlänge (L) zum linken Rückblickspiegelende (17) progressiv steigend zu.

In dem Seitenspiegelabschnitt (3) sind beispielhaft Schnittlinien von zur Bezugslinie (6) orthogonalen Schnittebenen (5a - 5c) eingezeichnet, deren Krümmung jeweils der Krümmung der horizontalen Bezugslinie (6) in deren Schnittstellen (7a - 7c) entspricht. Der horizontale und vertikale Krümmungsradius dieser beispielhaft gewählten Schnittstellen (7a - 7c) ist nach der Formel $R = A^2 : L$ bei einem Klotoidenparameter A = 130 mm aus der folgenden Tabelle ersichtlich.

| Schnittstelle | Bogenlänge (L) (in mm) | Krümmungsradius (R) (in mm) |
|---|---|---|
| (7 a) | 40 | 338 |
| (7 b) | 80 | 211,25 |
| (7 c) | 120 | 140,833 |

Die Koordinaten (x, y) der horizontalen Bezugslinie (6) bestimmen sich für den Klotoidenparameter A = 1, d.h. in der Normalform, aus der jeweiligen Bogenlänge (L) nach den folgenden Formeln:

$$x = \int_0^L \cos L^2/2 \cdot dL; \qquad\qquad y = \int_0^L \sin L^2/2 \cdot dL.$$

Zwischen der Übergangslinie (4) und einer senkrechten Torsionsbeendungslinie (9) ist beispielsweise ein Torsionsabschnitt (8) ausgebildet.

Statt der Anordnung der horizontalen Klotoidenbezugslinie (6) in der Mitte des Spiegels ist in einer anderen Ausführung die Klotoidenbezugslinie (6A) etwa in der Höhe der scheinbaren Horizontabbildung im Rückblickspiegel (1), also oberhalb der Mitte vorgesehen. Dadurch wird eine bessere Sicht zur Seite nach unten ermöglicht, und es können dicht neben dem Fahrzeug fahrende Zweiräder optisch gut erfasst werden. Der Torsionsabschnitt (8) kann dadurch entfallen, da er einen ähnlichen Effekt hat.

Weiterhin ist schematisch ein Abblendkipphebel (10) eingezeichnet, mit dem zumindest der Planspiegelabschnitt (2) blendfrei eingestellt werden kann.

Im rechten Bereich des Rückblickspiegels ist optional ein weiterer nach Art einer Klotoide gekrümmter Seitenspiegelabschnitt (11) vorgesehen, der von der vertikalen Übergangslinie (12) aus sich so erstreckt, daß der rechte Seitenfensterbereich optisch erfaßt wird. Der Klotoidenparameter A ist wegen der anderen Sichtwinkel größer als auf dem fahrerseitigen gekrümmten Seitenspiegelabschnitt (3).

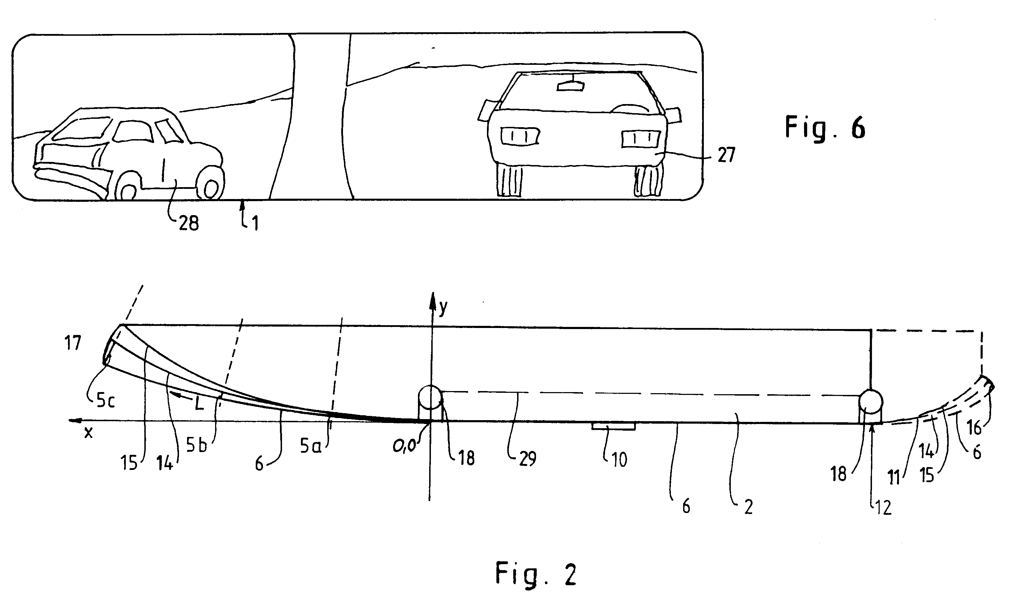

Fig. 2 zeigt die Spiegeloberfläche des Ausführungsbeispiels in einer Sicht von oben. Der mit zunehmender Bogenlänge (L) stärker gekrümmte Seitenspiegelabschnitt (3) schließt an der Übergangslinie (4) an den Planspiegelabschnitt (2) an. An der Übergangslinie (4) sind die Koordinaten (x, y) der horizontalen Bezugslinie (6, 6A) gleich 0. Die Spiegeloberkante (14) des Seitenspiegelabschnitts (3) ist aufgrund der Torsion oder der Verlagerung der horizontalen Bezugslinie (6) nach oben (6A) weniger vom Beobachter weggerichtet als die Spiegelunterkante (15).

Der gestrichelt gezeichnete optionale rechte Seitenspiegelabschnitt (11) weist eine geringere Seitenausdehnung und eine stärkere Krümmung als der linke Seitenspiegelabschnitt (3) auf.

An den Übergangslinien (4, 12) sind auf der Rückseite des Spiegels Gelenke (18, 18A) eingezeichnet, wodurch das Abblenden des Planspiegelabschnitts (2) um die Abblendkippachse (29) ohne Beeinflussung des Stellwinkels der Seitenspiegelabschnitte (3, 11) möglich ist.

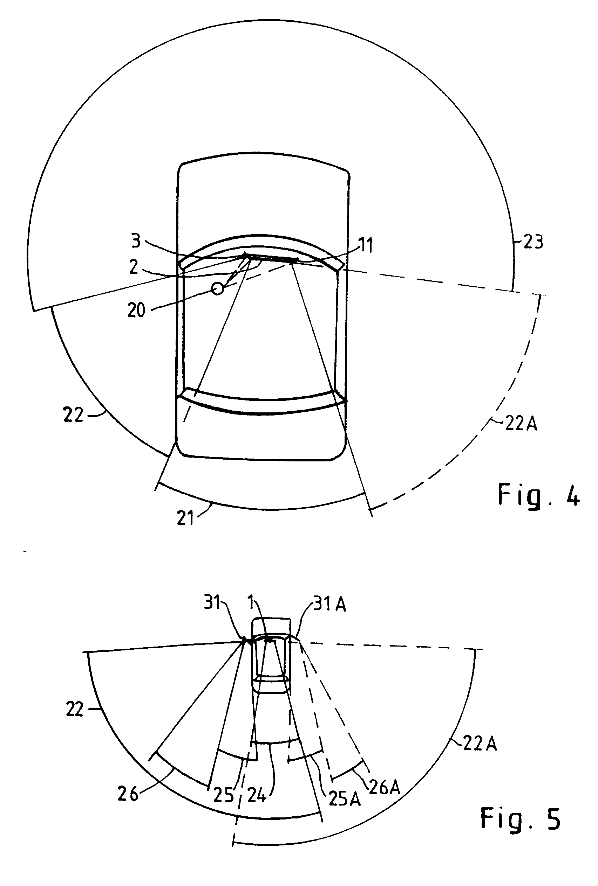

Fig. 3 Zeigt einen von der Torsionsbeendungslinie (9) zum linken Spiegelende (17) hin gesehenen Querschnitt des Seitenspiegelabschnitts (3). Die Spiegeloberkante (14) ist um die horizontale Bezugslinie (6) zum Fahrzeuginnenraum hingedreht, während die Spiegelunterkante (15) um die horizontale Bezugslinie (6) vom Fahrzeuginnenraum weggedreht ist. Die Torsion wird im Vergleich zu einer senkrechten Bezugslinie (19) veranschaulicht. Der Torsionswinkel (30) des Ausführungsbeispiels beträgt zur senkrechten Bezugslinie (19) 3° - 9°.

Fig. 4 zeigt die aus der Position eines Normalfahrers (20) durch den Planspiegelabschnitt (2) erfassten Sichtwinkel (21) und den durch den Seitenspiegelabschnitt (3, 11) erfassten Sichtwinkel (22). Es zeigt sich, daß der vom Seitenspiegelabschnitt (3) erfasste Sichtwinkel (22) unmittelbar an den Direktsichtwinkel (23) anschließt und somit der bisherige "tote Winkel" ausgeschlossen wird.

Der gestrichelt gezeichnete rechte Seitensichtwinkel (22A) ergibt sich bei Vorhandensein des rechten gekrümmten Seitenspiegelabschnitts (11). Dieser erfasst insbesondere auch Zweiradfahrer im Nahbereich neben dem Fahrzeug.

Fig. 5 verdeutlicht den durch den Rückblickspiegel (1) erweiterten Sichtwinkel (22, 22A) eines Normalfahrers im Vergleich zu dem Innenplanspiegelsichtwinkel (24) sowie den durch übliche Außenspiegel (31, 31A) erfaßbaren Außenplanspiegelsichtwinkel (25, 25A) und Außen eitwinkelspiegelsichtwinkel (26, 26A). Letzterer erfaß wegen seiner ungünstigen Lage zum Beobachter einen geringeren Bereich als der erfindungsgemäß gekrümmte Teil des Innenspiegels.

Fig. 6 zeigt, wie der Normalfahrer ein hinter sich befindliches Fahrzeug (27) und ein seitlich neben sich befindliches Fahrzeug (28) in dem Rückblickspiegel (1) sieht. Durch die progressiv zunehmende Verkleinerung der näherkommenden Objekte ergibt sich ein etwa parlleler Verlauf der Fluchtlinien und eine annähernd konstante Größe der scheinbaren Bilder.

**Patentansprüche**

1. Rückspiegel (1) für Kraftfahrzeuge, bestehend aus einem Planspiegelabschnitt (2) und mindestens einem seitlich daran mit stetiger Steigung anschließendem konvex gekrümmten Seitenspiegelabschnitt (3, 11), der an der Übergangslinie (4, 12) zum Planspiegelabschnitt (2) die Krümmung 0 hat und der mit zunehmenden Abstand von dem Planspiegelabschnitt (2) eine fortlaufend stärkere Krümmung aufweist, die mit zunehmenden Abstand von der Übergangslinie (4, 12) stetig progressiv zunimmt, dadurch gekennzeichnet, daß der Rückblickspiegel (1) ein Innenrückblickspiegel ist, daß die Schnittlinien orthogonaler Ebenen des Seitenspiegelabschnittes (3, 11) Kreise sind, deren Krümmung jeweils der Krümmung einer horizontalen Bezugslinie (6, 6A) auf dem Seitenspiegelabschnitt (3,11) in deren Schnittpunkt mit den jeweiligen Kreisen entspricht, daß die Krümmung des Seitenspiegelabschnitts (3, 11) nach Art einer Klotoide linear mit der Bogenlänge (L) auf der horizontalen Bezugslinie (6, 6A) auf dem Seitenspiegelabschnitt (3,11) zunimmt, daß die Krümmung des auf der fahrerseite befindlichen Seitenspiegelabschnitts (3) festlegende Klotoide einen Klotoidenparameter A zwischen 100 mm und 200 mm hat und daß die horizontale Bezugslinie (6, 6A) mittig oder oberhalb der Spiegelmitte, etwa in Höhe einer scheinbaren Horizontlinie (6A) für den Normalbeobachter, verläuft.

2. Rückblickspiegel nach Anspruch , dadurch gekennzeichnet, daß die Klotoide einen Klotoidenparameter A gleich 130 mm hat.

3. Rückblickspiegel nach einem der vorhergehenden Ansprüche, dadurch gekennzeichnet, daß ein von der Übergangslinie (4) und einer vertikalen Torsionsbeendungslinie (9) begrenzter Torsionsabschnitt (8) des gekrümmten Seitenspiegelabschnitts (3) um die durch diesen Teilabschnitt verlaufende horizontale Bezugslinie (6) um etwa 3°- 9° nach unten gerichtet ist und der Torsionsabschnitt (8) etwa über 1/4 des gekrümmten Seitenspiegelabschnitts (3) verlaufend angeordnet ist.

4. Rückblickspiegel nach einem der vorhergehenden Ansprüchen, dadurch gekennzeichnet, daß sich die die Länge des Planspiegelabschnitts (2) sich zur Länge des Seitenspiegelabschnittes (3) etwa wie 2:1 verhält und die Länge des Seitenspiegelabschnitts (3) etwa 8 - 15 cm beträgt.

5. Rückblickspiegel nach Anspruch 4, dadurch gekennzeichnet, daß die Länge des Seitenspiegelabschnitts (3) etwa 12 cm beträgt.

6. Rückblickspiegel nach einem der vorhergehenden Ansprüche dadurch gekennzeichnet, daß der Rückblickspiegel (1) einstückig ausgebildet ist.

7. Rückblickspiegel nach einem der vorhergehenden Ansprüche, dadurch gekennzeichnet, daß zumindest der Planspiegelabschnitt (2) mittels eines Abblendkipphebels (10) verstellbar ist.

8. Rückblickspiegel nach einem der vorhergehenden Ansprüche dadurch gekennzeichnet, daß zwischen dem Planspiegelabschnitt (2) und dem Seitenspiegelabschnitt (3, 11) ein Gelenk (18) angeordnet ist.

9. Rückblickspiegel nach einem der vorhergehenden Ansprüche, dadurch gekennzeichnet daß der Seitenspiegelabschnitt (3, 11) abblendvergütet ist.

10. Rückblickspiegel nach einem der vorhergehenden Ansprüche, dadurch gekennzeichnet, daß die die Krümmung des auf der Beifahrerseite angeordneten Seitenspiegelabschnitts (11) festlegende Klotoide einen größeren Klotoidenparameter A hat als die die Krümmung des auf der Fahrerseite befindlichen Seitenspiegelabschnitts (3) festlegende Klotoide.

11. Rückblickspiegel nach einem der vorstehenden Ansprüche, dadurch gekennzeichnet, daß der Seitenspiegelabschnitt (3, 11) durch Warmbiegen einer planen Glasplatte erzeugt ist.

## Claims

1. A rear-view mirror (1) for vehicles, comprising a plane-mirror section (2) and at least one convexly curved side section (3, 11) contiguous with the sides of the plane-mirror section and sloping steadily, and having a curvature of zero at the transition line (4, 12) into the plane-mirror section (2), the curvature of the side section continuously increasing steadyly progressively with increasing distance from the plane-mirror section (2), characterized in that the rear-view mirror (1) is an inside- rear-view mirror, that the lines of intersection of orthogonal planes of the side-mirror section (3, 11) are circles whose curvature corresponds respectively to the curvature of a horizontal line of reference (6, 6A) on the side-mirror section in their point of intersection with the circles, that the curvature of the side-mirror section (3, 11) increases in the manner of a clothoid spiral in linear fashion with the arc length (L) on the horizontal line of reference (6, 6A) on the side-mirror section (3, 11), that the curvature of the clothoid spiral defining the curvature of the side-mirror section (3) on the driver's side has a clothoid parameter A between 100 mm and 200 mm, and that the horizontal line of reference (6, 6A) extends in the center or above the center of the mirror center, approximately at the height of an apparent horizontal line (6A) for the normal viewer.

2. The rear-view mirror as defined by claim 1, characterized in that the clothoid spiral has a clothoid parameter of A = 130 mm.

3. The rear-view mirror as defined by one of the foregoing claims, characterized in that a torsion section (8) of the curved side-mirror section (3) that is defined by the transition line (4) and a vertical torsion end line (9) is oriented downward by approximately 3° to 9° around the horizontal line of reference (6) extending through this partial section, and that the torsion section (8) is disposed to extend over approximately 1/4 of the curved side-mirror section (3).

4. The rear-view mirror as defined by one of the foregoing claims, characterized in that the lengths of the plane-mirror section (2) and the side-mirror section (3) are in a ratio of approximately 2 : 1, and that the length of the side-mirror section (3) is approximately 8 to 15 cm.

5. The rear-view mirror as defined by claim 4, characterized in that the length of the side-mirror section (3) is approximately 12 cm.

6. The rear-view mirror as defined by one of the foregoing claims, characterized in that the rear-view mirror (1) is embodied in one piece.

7. The rear-view mirror as defined by one of the foregoing claims, characterized in that at least the plane-mirror section (2) is adjustable by means of a dimming tilt-lever (10).

8. The rear-view mirror as defined by one of the foregoing claims, characterized in that a hinge (18) is disposed between the plane-mirror section (2) and the side-mirror section (3, 11).

9. The rear-view mirror as defined by one of the foregoing claims, characterized in that the side-mirror section (3, 11) is provided with an anti-glare coating.

10. The rear-view mirror as defined by one of the foregoing claims, characterized in that the clothoid spiral defining the curvature of the side-mirror section (11) disposed on the passenger side has a larger clothoid parameter A than the clothoid spiral defining the curvature of the side-mirror section (3) on the driver side.

11. The rear-view mirror as defined by one of the foregoing claims, characterized in that the side-mirror section (3, 11) is produced by means of hot bending of a flat glass plate.

**Revendications**

1. Rétroviseur (1) pour véhicule automobile, composé d'une partie de miroir plane (2) et d'au moins une partie de miroir latérale (3; 11), convexe, y raccordée latéralement, en pente ascendante croissante, et présentant une courbure de 0 à la ligne de transition (4, 12) vers la partie de miroir plane (2), la courbure croissant progressivement en fonction de l'accroissement de la distance de la partie de miroir plane (2), qui augmente progressivement suivant l'accroissement de la distance de la ligne de transition (4, 12),
caractérisé en ce que
le rétroviseur (1) est un rétroviseur intérieur, que les lignes d'intersection de plans orthogonaux de la partie de miroir latérale (3; 11) sont des cercles, dont la courbure respective, à leur point d'intersection, correspond à la courbure d'une ligne de référence horizontale (6A) sur la partie de miroir latérale (3; 11), que la courbure de la partie de miroir latérale (3; 11), à la manière d'une clothoïde, augmente linéairement avec la longueur d'arc (L) sur la ligne de référence horizontale (6, 6A) sur le secteur de miroir latéral (3; 11), que le paramètre clothoïdal A déterminant la courbure de la partie de miroir latérale (3), côté conducteur, est situé entre 100 m et 200 mm et que, pour l'observateur normal, la ligne de référence horizontale (6, 6A) s'étend centralement ou au-dessus du milieu du miroir, à peu près à la hauteur d'une ligne horizontale virtuelle (6A).

2. Rétroviseur selon la revendication 1,
caractérisé en ce que
le paramètre A de la clothoïde est égal à 130 mm.

3. Retroviseur selon l'une des revendications précédentes,
caractérisé en ce que
une section de torsion (8) de la partie de miroir courbée (3), limitée par la ligne de transition (4) et une ligne verticale (9) terminant la torsion, est dirigée vers le bas, d'environ 3 o à 9 o par rapport à la ligne de référence horizontale (6) traversant ce secteur partiel, et que la section de torsion (8) s'étend sur 1/4 environ de la partie de miroir latérale, courbée (3).

4. Rétroviseur selon l'une des revendications précédentes,
caractérisé en ce que
le rapport entre la longueur de la partie de miroir plane (2) et la longueur de la partie de miroir latérale (3) est d'environ 2:1 et que la longueur de la partie de miroir latérale (3) est d'environ 8 à 15 cm.

5. Rétroviseur selon la revendcication 4,
caractérisé en ce que
la longueur de la partie de miroir latérale (3) est d'environ 12 cm.

6. Rétroviseur selon l'une des revendications précédentes,
caractérisé en ce que
le rétroviseur (1) est conçu d'une seule pièce.

7. Rétroviseur selon l'une des revendications précédentes,
caractérisé en ce que
la partie de miroir plane (2), au moins, est réglable à l'aide d'un levier basculant, anti-éblouissant.

8. Rétroviseur selon l'une des revendications précédentes,
caractérisé en ce que
une articulation (18) est disposée entre la partie de miroir plane (2) et la partie de miroir latérale (3; 11).

9. Rétroviseur selon l'une des revendications précédentes,
caractérisé en ce que
la partie de miroir latérale (3; 11) est traitée anti-éblouissante.

10. Rétroviseur selon l'une des revendications précédentes,
caractérisé en ce que
la clothoïde déterminant la courbure de la partie de miroir latérale (11), côté passager, présente un paramètre A plus élevé que celui de la clothoïde déterminant la courbure de la partie de miroir latérale (3), côté conducteur.

11. Rétroviseur selon l'une des revendications précédentes,
caractérisé en ce que
lea partie de miroir latérale (3, 11) consiste en une plaque de verre plane, courbée à chaud.

Fig. 1

Fig. 3

EP 0 561 785 B1

Fig. 6

EP 0 561 785 B1

Fig. 2

Fig. 4

Fig. 5